(19) **Europäisches Patentamt / European Patent Office / Office européen des brevets**

(11) **EP 4 285 483 B1**

(12) **EUROPÄISCHE PATENTSCHRIFT**

(45) Veröffentlichungstag und Bekanntmachung des Hinweises auf die Patenterteilung:
**13.05.2026 Patentblatt 2026/20**

(21) Anmeldenummer: **21835225.0**

(22) Anmeldetag: **08.12.2021**

(51) Internationale Patentklassifikation (IPC):
**H02P 23/14** *(2006.01)*

(52) Gemeinsame Patentklassifikation (CPC):
**H02P 23/14**

(86) Internationale Anmeldenummer:
**PCT/EP2021/084847**

(87) Internationale Veröffentlichungsnummer:
**WO 2022/161679 (04.08.2022 Gazette 2022/31)**

(54) **BESTIMMEN VON UNTERSCHIEDLICHEN ARBEITSPUNKTEN EINES ELEKTROMOTORS ZUGEORDNETEN WERTE EINER PHYSIKALISCHEN GRÖSSE DES ELEKTROMOTORS**

DETERMINING VALUES OF A PHYSICAL PARAMETER OF AN ELECTRIC MOTOR ASSIGNED TO DIFFERENT OPERATING POINTS OF THE ELECTRIC MOTOR

DÉTERMINATION DE VALEURS D'UN PARAMÈTRE PHYSIQUE D'UN MOTEUR ÉLECTRIQUE ASSOCIÉ À DIFFÉRENTS POINTS DE FONCTIONNEMENT DU MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2021 DE 102021000376**

(43) Veröffentlichungstag der Anmeldung:
**06.12.2023 Patentblatt 2023/49**

(73) Patentinhaber: **SEW-EURODRIVE GmbH & Co. KG 76646 Bruchsal (DE)**

(72) Erfinder: **KRÄMER, Andre 75015 Bretten (DE)**

(56) Entgegenhaltungen:
**CN-A- 108 063 569     US-A1- 2011 163 707**

**Beschreibung**

Die Erfindung betrifft ein Verfahren zum Bestimmen von unterschiedlichen Arbeitspunkten eines Elektromotors zugeordneten Werte einer physikalischen Größe des Elektromotors.

Es ist allgemein bekannt, dass ein Elektromotor mit einer Drehzahl betrieben wird und dabei mit einem Drehmoment belastet wird.

Aus der DE 10 2016 207 333 A1 ist ein Verfahren zur Regelung einer elektrischen Maschine während eines Impulsstartes eines Verbrennungsmotors bekannt.

**Aus der** US 2011/163707 A1 **ist als nächstliegender Stand der Technik ein Verfahren zum Bestimmen von unterschiedlichen Arbeitspunkten eines Elektromotors zugeordneten Werte einer physikalischen Größe des Elektromotors, nämlich des Wirkungsgrads des Elektromotors, bekannt.**

**Aus der** CN 108 063 569 B **ist ebenfalls ein solches Verfahren bekannt.**

Aus der DE102013204194A1 ist ein Regelungssystem fuer eine Synchronmaschine und Verfahren zum Betreiben einer Synchronmaschine bekannt.

Der Erfindung liegt daher die Aufgabe zugrunde, ein Verfahren zur Vermessung eines Wirkungsgradkennfeldes eines Elektromotors weiterzubilden.

Erfindungsgemäß wird die Aufgabe bei dem Verfahren nach den in Anspruch 1 angegebenen Merkmalen gelöst.

Wichtige Merkmale der Erfindung bei dem Verfahren zum Bestimmen von unterschiedlichen Arbeitspunkten eines Elektromotors zugeordneten Werte einer physikalischen Größe des Elektromotors, **nämlich** des Wirkungsgrads des Elektromotors, sind, dass

in einem ersten Verfahrensschritt der Elektromotor an einem ersten Arbeitspunkt, insbesondere an einem als Messpunkt fungierenden Arbeitspunkt, eine erste Zeitdauer $t_1$ betrieben wird und ein erster der Werte der physikalischen Größe des Elektromotors erfasst und/oder bestimmt wird, und

in einem zweiten Verfahrensschritt der Elektromotor an einem zweiten Arbeitspunkt, insbesondere an einem als Kompensationspunkt fungierenden Arbeitspunkt, eine zweite Zeitdauer $t_2$ betrieben wird.

Von Vorteil ist dabei, dass nach jeder Bestimmung eines Messpunktes des Kennfeldes der physikalischen Größe, insbesondere des Wirkungsgradkennfeldes, ein Kompensationsbetrieb stattfindet, der somit ein Ausgleichen der Temperatur ermöglicht, wenn im ersten Verfahrensschritt eine Temperaturveränderung stattgefunden hat. Als Solltemperatur ist vorzugsweise die beim stationären Betrieb des Elektromotors an seinem Nennpunkt sich einstellende Temperatur vorgebbar. Auf diese Weise ist also erfindungsgemäß ein Vermessen des Kennfeldes bei quasistationärer Temperatur ermöglicht.

Nachteilig ist bei der Erfindung, dass der zweite Verfahrensschritt eine Zeitdauer in Anspruch nimmt und somit die Gesamtzeit der Vermessung des Kennfeldes erheblich sein kann, wenn viele jeweilige erste und zweite Verfahrensschritte ausgeführt werden müssen.

Bei einer vorteilhaften Ausgestaltung werden der erste und der zweite Verfahrensschritt für jeweils andere erste und zweite Arbeitspunkte durchgeführt. Von Vorteil ist dabei, dass ein gesamtes Kennfeld für die physikalische Größe durchmessbar ist. Die zum Kompensationsbetrieb verwendeten zweiten Arbeitspunkte sind nicht Teil des zu vermessenden Kennfeldes, solange nicht zufällig ein zweiter Arbeitspunkt identisch mit einem ersten Arbeitspunkt ist. In einem solchen letztgenannten jeweiligen Sonderfall kann dann auch der zweite Arbeitspunkt als ein erster Arbeitspunkt des Kennfeldes zum Bestimmen eines Wertes der physikalischen Größe genutzt werden und es muss in diesem jeweiligen Sonderfall dann keine Kompensation stattfinden.

Bei einer vorteilhaften Ausgestaltung wird danach, also nach dem ersten und zweiten Verfahrensschritt, in jeweiligen Verfahrensschritten jeweils

- für eine jeweilige erste Zeitdauer $t_1$ der Elektromotor an einem jeweiligen ersten Arbeitspunkt, insbesondere an einem als jeweiliger Messpunkt fungierenden Arbeitspunkt, betrieben und ein jeweiliger weiterer der Werte der physikalischen Größe des Elektromotors wird erfasst und/oder bestimmt,

- und danach wird für eine jeweilige zweite Zeitdauer $t_2$ der Elektromotor an einem jeweiligen zweiten Arbeitspunkt, insbesondere an einem als jeweiliger Kompensationspunkt fungierenden Arbeitspunkt, betrieben.

Von Vorteil ist dabei, dass nicht nur ein einziger Arbeitspunkt, der zum Bestimmen eines Wertes der Größe verwendet wird, kompensiert wird sondern alle Arbeitspunkte eines Kennfeldes, die zum Bestimmen von Werten der Größe verwendet werden.

Bei einer vorteilhaften Ausgestaltung gleicht der für das aus der ersten Zeitdauer t1 und der zweiten Zeitdauer t2 gebildete Zeitintervall bestimmte zeitliche Mittelwert, insbesondere arithmetische Mittelwert, der **drehzahl**abhängigen Verlustleistung des Elektromotors der sich im stationären Betrieb des Elektromotors an einem dritten Arbeitspunkt, insbesondere Nennpunkt, einstellenden **drehzahl**abhängigen Verlustleistung. Von Vorteil ist dabei, dass die von der Verlustleistung bewirkte Änderung der Temperatur kompensierbar ist und somit das Kennfeld, also alle jeweiligen ersten Arbeitspunkte, bei quasi konstanter Temperatur durchmessbar ist.

Bei einer vorteilhaften Ausgestaltung gleicht der für das aus der ersten Zeitdauer t1 und der zweiten Zeitdauer t2 gebildete Zeitintervall bestimmte zeitliche Mittelwert, insbesondere arithmetische Mittelwert, der **last**abhängigen Verlustleistung des Elektromotors der sich im stationären Betrieb des Elektromotors an einem dritten Arbeitspunkt, insbesondere Nennpunkt, einstellenden **last**abhängigen Verlustleistung. Von Vorteil ist dabei, dass die von der Verlustleistung bewirkte Änderung der Temperatur kompensierbar ist und somit das Kennfeld, also alle jeweiligen ersten Arbeitspunkte, bei quasi konstanter Temperatur durchmessbar ist.

Bei einer vorteilhaften Ausgestaltung ist jedem der Arbeitspunkte ein jeweiliges Zweiertupel insbesondere eineindeutig zugeordnet, wobei das jeweilige Zweiertupel einen jeweiligen Wert der Drehzahl des Elektromotors und einen jeweiligen Wert des Drehmoments des Elektromotors aufweist. Von Vorteil ist dabei, dass die Arbeitspunkte durch die beiden Werte jeweils eineindeutig definiert und jeweils voneinander unterscheidbar sind.

Bei einer vorteilhaften Ausgestaltung wird zur Modellierung der drehzahlabhängigen Verlustleistung eine Funktion verwendet, deren Funktionswert proportional zur c-ten Potenz der Drehzahl des Elektromotors ist, wobei c größer als Null, insbesondere größer als 1 und kleiner als 3, ist,

und/oder

zur Modellierung der lastabhängigen Verlustleistung wird eine Funktion verwendet, deren Funktionswert proportional zum Quadrat des Motorstroms, insbesondere also zum Quadrat des vom Elektromotor aufgenommenen Stroms, ist. Von Vorteil ist dabei, dass eine möglichst gute Modellierung verwendbar ist und damit eine quasistationäre Vermessung ermöglicht ist.

Bei einer vorteilhaften Ausgestaltung wird im ersten Verfahrensschritt, insbesondere als erster Arbeitspunkt, der Elektromotor bei einer Drehzahl $n_{LP}$ mit einem Drehmoment $M_{LP}$ während der ersten Zeitdauer $t_1$ belastet

und danach, also im zweiten Verfahrensschritt, insbesondere als zweiter Arbeitspunkt, wird der Elektromotor bei einer Drehzahl $n_{CP}$ mit einem Drehmoment $M_{CP}$ während der zweiten Zeitdauer $t_2$ belastet,

wobei die Drehzahl $n_{CP}$ und das Drehmoment $M_{CP}$ bestimmt werden gemäß:

$$M_{CP} = \sqrt{\frac{(t_1 + t_2)M_N^2 - t_1 M_{LP}^2}{t_2}}$$

$$n_{CP} = \sqrt[c]{\frac{(t_1 + t_2)n_N^c - t_1 n_{LP}^c}{t_2}}$$

, wobei $n_N$ die Drehzahl am dritten Arbeitspunkt, insbesondere Nennpunkt, und $M_N$ das Drehmoment am dritten Arbeitspunkt, insbesondere Nennpunkt, ist und c eine reelle Zahl, die größer ist als Null,

insbesondere wobei c derart gewählt ist, dass für die drehzahlabhängige Verlustleistung $P_{V,n} \sim n^c$ gilt, wobei n die Drehzahl des Motors ist. Von Vorteil ist dabei, dass zu jedem Arbeitspunkt, an welchem ein Wert der Größe bestimmt wird, ein zweiter Arbeitspunkt zur thermischen Kompensation derart bestimmbar ist, dass der Mittelwert der drehzahlabhängigen Verlustleistung der sich im stationären Betrieb am Nennpunkt einstellenden drehzahlabhängigen Verlustleistung gleicht und

Bei einer vorteilhaften Ausgestaltung sind die zu den ersten Arbeitspunkten zugeordneten Drehmomentwerte voneinander äquidistant beabstandet

und/oder die zu den ersten Arbeitspunkten zugeordneten Drehzahlwerte sind voneinander äquidistant beabstandet. Von Vorteil ist dabei, dass das Kennfeld eng mit ersten Arbeitspunkten befüllbar ist und somit eine möglichst genaue Vermessung ermöglicht ist.

Wichtige Merkmale bei der Vorrichtung zur Durchführung eines vorgenannten Verfahrens sind, dass die Vorrichtung eine vom Elektromotor angetriebene Belastungsmaschine und einen Umrichter aufweist, wobei der Umrichter den Elektromotor speist.

Von Vorteil ist dabei, dass eine Vermessung des Kennfeldes bei möglichst quasistationärer Temperatur, nämlich der sich bei stationärem, insbesondere also quasistationärem, Betrieb einstellenden Temperatur ermöglicht ist.

Weitere Vorteile ergeben sich aus den Unteransprüchen.

Die Erfindung wird nun anhand von schematischen Abbildungen näher erläutert:

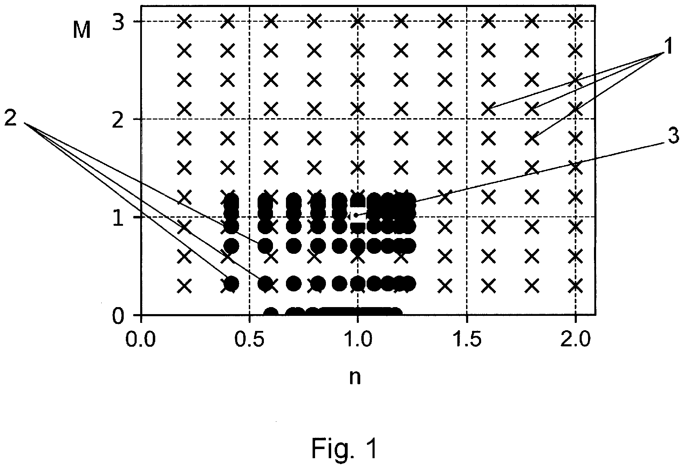

In der Figur 1 ist für ein erfindungsgemäßes Verfahren ein Feld von Arbeitspunkten dargestellt.

Wie in der Figur 1 dargestellt, werden zur Bestimmung eines Wirkungsgradkennfeldes eines umrichtergespeisten von einer Belastungsmaschine belasteten Elektromotors zeitlich nacheinander unterschiedliche Arbeitspunkte des Feldes angefahren.

Der Elektromotor ist vorzugsweise ein Drehstrommotor und wird von einem netzgespeisten Umrichter gespeist, der auf eine zum jeweiligen Arbeitspunkt gehörende Solldrehzahl n hinregelt. Dabei wird die vom Elektromotor angetriebene Belastungsmaschine derart betrieben, dass der Elektromotor mit einem Drehmoment M belastet wird.

Während der Elektromotor mit diesem Arbeitspunkt betrieben wird, verändert sich die Temperatur, da drehzahlabhängige Verlustleistungen und lastabhängige Verlustleistungen abhängig vom Arbeitspunkt auftreten.

Um während der Durchführung des Verfahrens möglichst nahe an einer gewünschten Solltemperatur zu verbleiben, wird der Elektromotor nach jedem als Messpunkt 2 fungierender Arbeitspunkt an einem als Kompensationspunkt 3 fungierenden Arbeitspunkt betrieben.

Die Solltemperatur wird zu Beginn des Verfahrens durch einen Arbeitspunkt, insbesondere Nennbetriebspunkt, erreicht, bei dem der Elektromotor mit seiner Nenndrehzahl n betrieben und mit dem Nennmoment M derart lange belastet wird, bis die Solltemperatur sich eingestellt hat.

Jedem Messpunkt ist ein Zweiertupel aus Drehzahl und Drehmoment zugeordnet. Die Messpunkte unterscheiden sich voneinander in ihren Zweiertupeln.

Wenn ein Messpunkt 2 eine derartige Drehzahl und ein derartiges Drehmoment aufweist, dass die Temperatur nach einer Messdauer $t_1$ über die Solltemperatur hinaus ansteigt, wird zeitlich daran anschließend ein Kompensationspunkt 3 angefahren, der eine geringere gesamte Verlustleistung aufweist und somit die Temperatur nach einer Zeitdauer $t_2$ auf die Solltemperatur absenkt.

Ebenso wird umgekehrt nach einem Messpunkt 2 mit niedrigerer Verlustleistung als am Nennbetriebspunkt ein Kompensationspunkt 3 angefahren, der eine größere Verlustleistung als am Nennbetriebspunkt derart aufweist, dass nach einer nach einer Zeitdauer $t_2$ wieder die zu Beginn der Vermessung am Messpunkt 2 vorhandenen Temperatur sich einstellt, die am Nennpunkt sich im stationären Betrieb einstellende Temperatur.

Erfindungsgemäß wird also der Kompensationspunkt 3 derart gewählt, dass nach einer Zeitdauer $t_2$ die am Nennpunkt sich im stationären Betrieb einstellende Temperatur erreicht wird, wenn zuvor der Messpunkt 2 für eine Zeitdauer $t_1$ angefahren wurde.

Erfindungsgemäß wird also nach dem eine Zeitdauer t1 andauernden Betreiben des Elektromotors am Messpunkt 2 der Elektromotor für eine Zeitdauer $t_2$ am Kompensationspunkt 3 betrieben, so dass der über die über die Gesamtzeit $t_1 + t_2$ gebildete Mittelwert der drehzahlabhängigen Verlustleistung $P_{V,n}$ der drehzahlabhängigen Verlustleistung $P_{V,n,N}$ am Nennpunkt 1 gleicht und dass der Mittelwert der lastabhängigen Verlustleistung $P_{V,M}$ über die Gesamtzeit $t_1 + t_2$ der lastabhängigen Verlustleistung am Nennpunkt gleicht.

Denn die Summe der drehzahlabhängigen Verlustleistung $P_{V,n}$ und der lastabhängigen Verlustleistung $P_{V,M}$ gleicht im Wesentlichen der gesamten Verlustleistung des Elektromotors.

Vorzugsweise gilt für den Mittelwert der drehzahlabhängigen Verlustleistung.

$$P_{V,n,N} = \frac{1}{t_1 + t_2} \cdot (t_1 \cdot P_{V,n,LP} + t_2 \cdot P_{V,n,CP})$$

und

für den für den Mittelwert der lastabhängigen Verlustleistung

$$P_{V,M,N} = \frac{1}{t_1 + t_2} \cdot (t_1 \cdot P_{V,M,LP} + t_2 \cdot P_{V,M,CP})$$

wobei die Messdauer $t_1$ am Messpunkt 2 eingehalten wird,
wobei die Messdauer $t_2$ am Kompensationspunkt 3 eingehalten wird,
wobei $P_{V,M,LP}$ die lastabhängige Verlustleistung am Messpunkt 2 ist,
wobei $P_{V,M,CP}$ die lastabhängige Verlustleistung am Kompensationspunkt 3 ist,
wobei $P_{V,n,LP}$ die drehzahlabhängige Verlustleistung am Messpunkt 2 ist,

wobei $P_{V,n,CP}$ die drehzahlabhängige Verlustleistung am Kompensationspunkt 3 ist,
wobei $P_{V,M,N}$ die lastabhängige Verlustleistung am Nennpunkt ist
und $P_{V,n,N}$ die drehzahlabhängige Verlustleistung am Nennpunkt ist.

Der Nennpunkt ist ein vom Hersteller des Elektromotors festgelegter Arbeitspunkt, der nicht am Rand des Feldes angeordnet ist, da ansonsten keine geeigneten Kompensationspunkte 3 bestimmbar sind.

Bei einer bevorzugten Ausführung wird aus einem Messpunkt 2, dem ein Drehmoment $M_{LP}$ und eine Drehzahl $n_{LP}$ zugeordnet sind, ein Kompensationspunkt bestimmt, der ein Drehmoment $M_{CP}$ und eine Drehzahl $n_{CP}$ aufweist, die bestimmt sind gemäß

$$M_{CP} = \sqrt{\frac{(t_1 + t_2)M_N^2 - t_1 M_{LP}^2}{t_2}}$$

$$n_{CP} = \sqrt[c]{\frac{(t_1 + t_2)n_N^c - t_1 n_{LP}^c}{t_2}}$$

wobei $n_N$ die Drehzahl am Nennpunkt und $M_N$ das Drehmoment am Nennpunkt ist und c eine reelle Zahl, die größer ist als Null. Vorzugsweise ist c derart gewählt, dass für die drehzahlabhängige Verlustleistung $P_{V,n} \sim n^c$ gilt, wobei n die Drehzahl des Motors ist.

Mit dem erfindungsgemäßen Verfahren ist für jeden Messpunkt der Wert einer physikalischen Größe, wie beispielsweise der Wirkungsgrad, bestimmbar. Daher wird die Zeitdauer $t_1$ derart gewählt, dass die Bestimmung des Wertes dieser physikalischen Größe damit ausreichender Genauigkeit erreicht wird. Beispielsweise wird als Zeitdauer $t_1$ eine Zeitdauer zwischen 10 und 100 Sekunden gewählt. Die Zeitdauer $t_2$ wird derart gewählt, dass der Radikand in den obigen Formeln größer Null ist, wobei die Zeitdauer $t_2$ möglichst wenig unterschiedlich zu $t_1$ gewählt wird. Bevorzugt gleichen sich also die beiden Zeitdauern, so dass gilt $t_1 = t_2$.

Vorzugsweise sind die Drehzahlen der Messpunkte 2 im Feld äquidistant verteilt und die Drehmomente der Messpunkte 2 sind ebenfalls äquidistant verteilt.

Weiter bevorzugt gilt für die lastabhängigen Verlustleistung $P_{V,M} \sim I^2$, wobei I der Motorstrom ist, insbesondere wobei für den Strom $I \sim M$ gilt, wobei M das Drehmoment des Motors ist.

Bei einer bevorzugten Ausführung wird aus einem Messpunkt 2, dem ein Drehmoment $M_{LP}$ und somit ein Strom $I_{LP}$ und eine Drehzahl $n_{LP}$ zugeordnet sind, ein Kompensationspunkt bestimmt, der ein Drehmoment $M_{CP}$ und somit einen Strom $I_{CP}$ und eine Drehzahl $n_{CP}$ aufweist, die bestimmt sind gemäß

$$I_{CP} = \sqrt{\frac{(t_1 + t_2)I_N^2 - t_1 I_{LP}^2}{t_2}}$$

$$n_{CP} = \sqrt[c]{\frac{(t_1 + t_2)n_N^c - t_1 n_{LP}^c}{t_2}}$$

wobei $n_N$ die Drehzahl am Nennpunkt und $I_N$ der Strom am Nennpunkt ist und c eine reelle Zahl, die größer ist als Null. Vorzugsweise ist c derart gewählt, dass für die drehzahlabhängige Verlustleistung $P_{V,n} \sim n^c$ gilt, wobei n die Drehzahl des Motors ist.

**Bezugszeichenliste**

P Leistung, insbesondere Verlustleistung
n Drehzahl
M Drehmoment
1 Nennpunkt

2 Messpunkt
3 Kompensationspunkt

**Patentansprüche**

1. Verfahren zum Bestimmen von unterschiedlichen Arbeitspunkten eines Elektromotors zugeordneten Werten einer physikalischen Größe des Elektromotors, nämlich des Wirkungsgrads des Elektromotors,

   wobei in einem ersten Verfahrensschritt der Elektromotor an einem ersten Arbeitspunkt, insbesondere an einem als Messpunkt (2) fungierenden Arbeitspunkt, eine erste Zeitdauer $t_1$ betrieben wird, die Verlustleistung bestimmt wird und ein erster der Werte der physikalischen Größe des Elektromotors bestimmt wird, und
   in einem zweiten Verfahrensschritt der Elektromotor an einem zweiten Arbeitspunkt, insbesondere an einem als Kompensationspunkt (3) fungierenden Arbeitspunkt, eine zweite Zeitdauer $t_2$ betrieben wird, die Verlustleistung bestimmt wird und ein zweiter der Werte der physikalischen Größe des Elektromotors bestimmt wird,
   **dadurch gekennzeichnet, dass**
   der für das aus der ersten Zeitdauer t1 und der zweiten Zeitdauer t2 gebildete Zeitintervall bestimmte zeitliche Mittelwert, insbesondere arithmetische Mittelwert, der Verlustleistung des Elektromotors der sich im stationären Betrieb des Elektromotors an einem dritten Arbeitspunkt, insbesondere Nennpunkt (1), bestimmten und einstellenden Verlustleistung gleicht,
   wobei der erste Verfahrensschritt und zweite Verfahrensschritt für jeweils weitere Arbeitspunkte mit jeweiligen Zeitdauern t1 und t2 wiederholt werden, wobei jeweils der für das aus der jeweiligen ersten Zeitdauer t1 und der jeweiligen zweiten Zeitdauer t2 gebildete Zeitintervall bestimmte zeitliche Mittelwert, insbesondere arithmetische Mittelwert, der Verlustleistung des Elektromotors der sich im stationären Betrieb des Elektromotors am dritten Arbeitspunkt, insbesondere Nennpunkt (1), bestimmten und einstellenden Verlustleistung gleicht.

2. Verfahren nach Anspruch 1,
   **dadurch gekennzeichnet, dass**
   der erste und der zweite Verfahrensschritt für jeweils andere erste und zweite Arbeitspunkte durchgeführt werden.

3. Verfahren nach einem der vorangegangenen Ansprüche,
   **dadurch gekennzeichnet, dass**
   danach in jeweiligen Verfahrensschritten jeweils

   - für eine jeweilige erste Zeitdauer $t_1$ der Elektromotor an einem jeweiligen ersten Arbeitspunkt, insbesondere an einem als jeweiliger Messpunkt (2) fungierenden Arbeitspunkt, betrieben wird und ein jeweiliger weiterer der Werte der physikalischen Größe des Elektromotors erfasst und/oder bestimmt wird,
   - und danach für eine jeweilige zweite Zeitdauer $t_2$ der Elektromotor an einem jeweiligen zweiten Arbeitspunkt, insbesondere an einem als jeweiliger Kompensationspunkt (3) fungierenden Arbeitspunkt, betrieben wird.

4. Verfahren nach einem der vorangegangenen Ansprüche,
   **dadurch gekennzeichnet, dass**
   der für das aus der ersten Zeitdauer t1 und der zweiten Zeitdauer t2 gebildete Zeitintervall bestimmte zeitliche Mittelwert, insbesondere arithmetische Mittelwert, der drehzahlabhängigen Verlustleistung des Elektromotors der sich im stationären Betrieb des Elektromotors an einem dritten Arbeitspunkt, insbesondere Nennpunkt (1), einstellenden drehzahlabhängigen Verlustleistung gleicht.

5. Verfahren nach einem der vorangegangenen Ansprüche,
   **dadurch gekennzeichnet, dass**
   der für das aus der ersten Zeitdauer t1 und der zweiten Zeitdauer t2 gebildete Zeitintervall bestimmte zeitliche Mittelwert, insbesondere arithmetische Mittelwert, der lastabhängigen Verlustleistung des Elektromotors der sich im stationären Betrieb des Elektromotors an einem dritten Arbeitspunkt, insbesondere Nennpunkt (1), einstellenden lastabhängigen Verlustleistung gleicht.

6. Verfahren nach einem der vorangegangenen Ansprüche,
   **dadurch gekennzeichnet, dass**
   jedem der Arbeitspunkte ein jeweiliges Zweiertupel insbesondere eineindeutig zugeordnet ist,
   wobei das jeweilige Zweiertupel einen jeweiligen Wert der Drehzahl des Elektromotors und einen jeweiligen Wert des Drehmoments des Elektromotors aufweist.

**7.** Verfahren nach einem der vorangegangenen Ansprüche,
**dadurch gekennzeichnet, dass**

zur Modellierung der drehzahlabhängigen Verlustleistung eine Funktion verwendet wird, deren Funktionswert proportional zur c-ten Potenz der Drehzahl des Elektromotors ist, wobei c größer als Null, insbesondere größer als 1 und kleiner als 3, ist,
und/oder dass
zur Modellierung der lastabhängigen Verlustleistung eine Funktion verwendet wird, deren Funktionswert proportional zum Quadrat des Motorstroms, insbesondere also zum Quadrat des vom Elektromotor aufgenommenen Stroms, ist.

**8.** Verfahren nach einem der vorangegangenen Ansprüche,
**dadurch gekennzeichnet, dass**

im ersten Verfahrensschritt, insbesondere als erster Arbeitspunkt, der Elektromotor bei einer Drehzahl $n_{LP}$ mit einem Drehmoment $M_{LP}$ für eine erste Zeitdauer $t_1$ belastet wird und dass danach, also im zweiten Verfahrensschritt, insbesondere als zweiter Arbeitspunkt, der Elektromotor bei einer Drehzahl $n_{CP}$ mit einem Drehmoment $M_{CP}$ für eine zweite Zeitdauer $t_2$ belastet wird,
wobei die Drehzahl $n_{CP}$ und das Drehmoment $M_{CP}$ bestimmt werden gemäß:

$$M_{CP} = \sqrt{\frac{(t_1 + t_2)M_N^2 - t_1 M_{LP}^2}{t_2}}$$

$$n_{CP} = \sqrt[c]{\frac{(t_1 + t_2)n_N^c - t_1 n_{LP}^c}{t_2}}$$

wobei $n_N$ die Drehzahl am dritten Arbeitspunkt, insbesondere Nennpunkt (1), und $M_N$ das Drehmoment am dritten Arbeitspunkt, insbesondere Nennpunkt (1), ist und c eine reelle Zahl, die größer ist als Null, insbesondere wobei c derart gewählt ist, dass für die drehzahlabhängige Verlustleistung $P_{V,n} \sim n^c$ gilt, wobei n die Drehzahl des Motors ist.

**9.** Verfahren nach einem der vorangegangenen Ansprüche,
**dadurch gekennzeichnet, dass**

die zu den ersten Arbeitspunkten zugeordneten Drehmomentwerte voneinander äquidistant beabstandet sind
und/oder dass
die zu den ersten Arbeitspunkten zugeordneten Drehzahlwerte voneinander äquidistant beabstandet sind.

**10.** Vorrichtung zur Durchführung eines Verfahrens nach einm der vorangegangenen Ansprüche,
**dadurch gekennzeichnet, dass**
die Vorrichtung eine vom Elektromotor angetriebene Belastungsmaschine und einen Umrichter aufweist, wobei der Umrichter den Elektromotor speist.

## Claims

**1.** Method for determining values of a physical variable of an electric motor, specifically the efficiency of the electric motor, that are assigned to different working points of the electric motor,

wherein, in a first method step, the electric motor is operated for a first length of time $t_1$ at a first working point, in particular at a working point acting as a measurement point (2), the power loss is determined, and a first of the values of the physical variable of the electric motor is determined, and

in a second method step, the electric motor is operated for a second length of time $t_2$ at a second working point, in particular at a working point acting as a compensation point (3), the power loss is determined, and a second of the values of the physical variable of the electric motor is determined,

**characterised in that**

the time average, in particular the arithmetic average, determined for the time period formed of the first length of time t1 and the second length of time t2, of the power loss of the electric motor is equal to the power loss that is determined and occurs at a third working point, in particular the nominal working point (1), while the electric motor is in steady-state mode, wherein the first method step and the second method step are repeated for each further working point using associated lengths of time t1 and t2, wherein the time average, in particular the arithmetic average, determined for the time period formed of each first length of time t1 and each second length of time t2, of the power loss of the electric motor is equal to the power loss that is determined and occurs at a third working point, in particular the nominal working point (1), while the electric motor is in steady-state mode.

2. Method according to claim 1,
**characterised in that**
the first and second method steps are carried out for every other first and second working point.

3. Method according to any of the preceding claims,
**characterised in that**
thereafter, in associated method steps, in each case

- the electric motor is operated for an associated first length of time $t_1$ at an associated first working point, in particular at a working point acting as an associated measurement point (2), and an associated further value of the values of the physical variable of the electric motor is detected and/or determined,
- and then the electric motor is operated for an associated second length of time $t_2$ at an associated second working point, in particular at a working point acting as an associated compensation point (3).

4. Method according to any of the preceding claims,
**characterised in that**
the time average, in particular the arithmetic average, determined for the time period formed of the first length of time t1 and the second length of time t2, of the speed-dependent power loss of the electric motor is equal to the speed-dependent power loss that occurs at a third working point, in particular the nominal working point (1), while the electric motor is in steady-state mode.

5. Method according to any of the preceding claims,
**characterised in that**
the time average, in particular the arithmetic average, determined for the time period formed of the first length of time t1 and the second length of time t2, of the load-dependent power loss of the electric motor is equal to the load-dependent power loss that occurs at a third working point, in particular the nominal working point (1), while the electric motor is in steady-state mode.

6. Method according to any of the preceding claims,
**characterised in that**

each of the working points is assigned, in particular unambiguously assigned, an associated two-tuple, each two-tuple having a particular value of the speed of the electric motor and a particular value of the torque of the electric motor.

7. Method according to any of the preceding claims,
**characterised in that**

to model the speed-dependent power loss, a function is used of which the function value is proportional to the cth power of the speed of the electric motor, where c is greater than zero, in particular greater than 1 and less than 3, and/or **in that**
to model the load-dependent power loss, a function is used of which the function value is proportional to the square of the motor current, i.e. in particular to the square of the current consumed by the electric motor.

8. Method according to any of the preceding claims,

**characterised in that**

in the first method step, in particular as a first working point, the electric motor is loaded with a torque $M_{LP}$ for a first length of time $t_1$ at a speed $n_{LP}$,

and **in that** thereafter, i.e. in the second method step, in particular as a second working point, the electric motor is loaded with a torque $M_{CP}$ for a second length of time $t_2$ at a speed $n_{CP}$, the speed $n_{CP}$ and the torque $m_{CP}$ being determined in accordance with:

$$M_{CP} = \sqrt{\frac{(t_1 + t_2)M_N^2 - t_1 M_{LP}^2}{t_2}}$$

$$n_{CP} = \sqrt[c]{\frac{(t_1 + t_2)n_N^c - t_1 n_{LP}^c}{t_2}}$$

where $n_N$ is the speed at the third working point, in particular the nominal working point (1), $M_N$ is the torque at the third working point, in particular the nominal working point (1), and c is a real number greater than zero, c in particular being selected such that $P_{V,n} \sim n^c$ applies to the speed-dependent power loss, where n is the speed of the motor.

9. Method according to any of the preceding claims,
   **characterised in that**

   the torque values assigned to the first working points are equidistant from one another, and/or **in that** the speed values assigned to the first working points are equidistant from one another.

10. Device for carrying out a method according to any of the preceding claims, **characterised in that** the device has a load machine, which is driven by the electric motor, and a converter, wherein the converter feeds the electric motor.

**Revendications**

1. Procédé de détermination de valeurs, associées à différents points de fonctionnement d'un moteur électrique, d'une grandeur physique du moteur électrique, à savoir le rendement du moteur électrique,

   le moteur électrique, dans une première étape de procédé, étant utilisé pendant une première durée $t_1$ à un premier point de fonctionnement, en particulier à un point de fonctionnement faisant office de point de mesure (2), la puissance dissipée étant déterminée et une première valeur parmi les valeurs de la grandeur physique du moteur électrique étant déterminée, et
   le moteur électrique, dans une deuxième étape de procédé, étant utilisé pendant une deuxième durée $t_2$ à un deuxième point de fonctionnement, en particulier à un point de fonctionnement faisant office de point de compensation (3), la puissance dissipée étant déterminée et une deuxième des valeurs de la grandeur physique du moteur électrique étant déterminée,
   **caractérisé en ce que**
   la valeur moyenne temporelle déterminée pour l'intervalle de temps formé à partir de la première durée $t_1$ et de la deuxième durée $t_2$, en particulier la valeur moyenne arithmétique, de la puissance dissipée du moteur électrique est égale à la puissance dissipée spécifique et en cours d'établissement à un troisième point de fonctionnement, en particulier à un point nominal (1), en fonctionnement stationnaire du moteur électrique,
   la première étape de procédé et la deuxième étape de procédé étant répétées respectivement pour d'autres points de fonctionnement avec des durées de temps $t_1$ et $t_2$ respectives, la valeur moyenne temporelle déterminée pour l'intervalle de temps formé à partir de la première durée $t_1$ respective et de la deuxième durée $t_2$ respective, en particulier la valeur moyenne arithmétique, de la puissance dissipée du moteur électrique étant respectivement égale à la puissance dissipée spécifique et en cours d'établissement au troisième point de fonctionnement, en particulier au point nominal (1), en fonctionnement stationnaire du moteur électrique.

**2.** Procédé selon la revendication 1,
**caractérisé en ce que**
les première et deuxième étapes de procédé sont mises en œuvre pour respectivement d'autres premier et deuxième points de fonctionnement.

**3.** Procédé selon l'une quelconque des revendications précédentes,
**caractérisé en ce que**
ensuite à chaque étape de procédé respective

- pendant une première durée $t_1$ respective, le moteur électrique est utilisé à un premier point de fonctionnement respectif, en particulier à un point de fonctionnement faisant office de point de mesure (2) respectif, et une autre valeur respective parmi les valeurs de la grandeur physique du moteur électrique est enregistrée et/ou déterminée,
- et le moteur électrique est ensuite utilisé pendant une deuxième durée $t_2$ respective à un deuxième point de fonctionnement respectif, en particulier à un point de fonctionnement faisant office de point de compensation (3) respectif.

**4.** Procédé selon l'une quelconque des revendications précédentes,
**caractérisé en ce que**
la valeur moyenne temporelle déterminée pour l'intervalle de temps formé à partir de la première durée $t_1$ et de la deuxième durée $t_2$, en particulier la valeur moyenne arithmétique, de la puissance dissipée, liée au régime, du moteur électrique est égale à la puissance dissipée, liée au régime, en cours d'établissement à un troisième point de fonctionnement, en particulier à un point nominal (1), en fonctionnement stationnaire du moteur électrique.

**5.** Procédé selon l'une quelconque des revendications précédentes,
**caractérisé en ce que**
la valeur moyenne temporelle déterminée pour l'intervalle de temps formé à partir de la première durée $t_1$ et de la deuxième durée $t_2$, en particulier la valeur moyenne arithmétique, de la puissance dissipée, liée à la charge, du moteur électrique est égale à la puissance dissipée, liée à la charge, en cours d'établissement à un troisième point de fonctionnement, en particulier à un point nominal (1), en fonctionnement stationnaire du moteur électrique.

**6.** Procédé selon l'une quelconque des revendications précédentes,
**caractérisé en ce que**

à chacun des points de fonctionnement est en particulier associé de manière univoque un doublet respectif, le doublet respectif présente une valeur respective du régime du moteur électrique et une valeur respective du couple du moteur électrique.

**7.** Procédé selon l'une quelconque des revendications précédentes,
**caractérisé en ce que**

une fonction dont la valeur de fonction est proportionnelle à la puissance c-ième du régime du moteur électrique est utilisée pour modéliser la puissance dissipée liée au régime, c étant supérieur à zéro, en particulier supérieur à 1 et inférieur à 3,
et/ou **en ce que**
une fonction dont la valeur de fonction est proportionnelle au carré du courant de moteur, en particulier au carré du courant absorbé par le moteur électrique, est utilisée pour modéliser la puissance dissipée liée à la charge.

**8.** Procédé selon l'une quelconque des revendications précédentes,
**caractérisé en ce que**

dans la première étape de procédé, en particulier pour faire office de premier point de fonctionnement, le moteur électrique est soumis pendant une première durée $t_1$ à un couple $M_{LP}$ pour un régime $n_{LP}$ et **en ce qu'**ensuite, c'est-à-dire dans la deuxième étape de procédé, en particulier pour faire office de deuxième point de fonctionnement, le moteur électrique est soumis pendant une deuxième durée $t_2$ à un couple $M_{CP}$ pour un régime $n_{CP}$, le régime $n_{CP}$ et le couple $M_{CP}$ étant déterminés comme ci-dessous :

$$M_{CP} = \sqrt{\frac{(t_1 + t_2)M_N^2 - t_1 M_{LP}^2}{t_2}}$$

$$n_{CP} = \sqrt[c]{\frac{(t_1 + t_2)n_N^c - t_1 n_{LP}^c}{t_2}}$$

$\Pi_N$ étant le régime au troisième point de fonctionnement, en particulier au point nominal (1), et $M_N$ étant le couple au troisième point de fonctionnement, en particulier au point nominal (1), et c étant un nombre réel supérieur à zéro,

c étant en particulier choisi de telle manière que $P_{V.n} \sim n^C$ donne la puissance dissipée liée au régime, n étant le régime du moteur.

9. Procédé selon l'une quelconque des revendications précédentes,
   **caractérisé en ce que**

   les valeurs de couple associées aux premiers points de fonctionnement sont équidistantes les unes des autres
   et/ou **en ce que**
   les valeurs de régime associées aux premiers points de fonctionnement sont équidistantes les unes des autres.

10. Dispositif permettant de mettre en œuvre un procédé selon l'une quelconque des revendications précédentes,
    **caractérisé en ce que**
    le dispositif présente une machine de charge entraînée par le moteur électrique et un convertisseur, le convertisseur alimentant le moteur électrique.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207333 A1
- US 2011163707 A1
- CN 108063569 B
- DE 102013204194 A1